# EUROPEAN PATENT SPECIFICATION

(11) **EP 4 460 109 B1**
(45) Date of publication and mention of the grant of the patent: **26.08.2026**
(21) Application number: 23762820.1
(22) Date of filing: 24.02.2023
(51) Int. Cl.: H04W 52/02, H04W 68/00, H04L 5/00, H04W 74/0833

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 04.03.2022 CN 202210212505
(43) Date of publication of application: 06.11.2024
(73) Proprietor: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); QU, Weilin, Shenzhen, Guangdong 518129 (CN)
(74) Representative: Goddar, Heinz J.
(86) International application number: PCT/CN2023/078086
(87) International publication number: WO 2023/165420

(56) References cited:
- WO-A1-2021/027427
- WO-A1-2021/062775
- WO-A1-2021/066726
- WO-A1-2021/066726
- CN-A- 113 243 128
- US-A1- 2020 396 687
- US-A1- 2022 167 273
- NOKIA, NOKIA SHANGHAI BELL: "UE-group wake-up signal for NB-IoT", 3GPP DRAFT; R1-1904176, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 29 March 2019 (2019-03-29), Mobile Competence Centre ; 650, route des Lucioles ; F-06921 Sophia-Antipolis Cedex ; France , XP051691320
- NOKIA, NOKIA SHANGHAI BELL: "On TRS muting", 3GPP DRAFT; R1-1913362, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, Nevada, U.S.A; 20191118 - 20191122, 25 November 2019 (2019-11-25), Mobile Competence Centre ; 650, route des Lucioles ; F-06921 Sophia-Antipolis Cedex ; France , XP051830643

## Description

### TECHNICAL FIELD

This application relates to the field of communication technologies, and in particular, to a communication method and a communication apparatus.

### BACKGROUND

A network may send a paging message to terminal devices in a radio resource control (radio resource control, RRC) idle state, an RRC inactive state, and an RRC connected state, to notify the terminal devices to perform corresponding operations or update related parameters. In a current paging procedure, because a terminal device needs to monitor each paging occasion (paging occasion, PO) and receive a paging message to determine whether the terminal device is paged, a large amount of energy is consumed. In addition, a multi-carrier paging mechanism is added to support paging capacity expansion. In the multi-carrier paging mechanism, an access network device needs to configure an access weight for each carrier by using a system message, so that the terminal device can determine, based on a received weight configuration and according to a formula defined in a communication protocol, a carrier for receiving the paging message. In the multi-carrier paging mechanism, because the terminal device needs to enable a main circuit module to receive the system message, a problem of high power consumption of the terminal device still exists.

WO 2021/066726 A1 describes that a RAN node receives, from a core network (CN), a paging probability (PP) configuration including a plurality of available PP classes or a plurality of non-overlapping PP ranges. The RAN node determines a mapping between the plurality of PP indication values and a plurality of available WUS groups based on the PP configuration received from the CN and on a paging configuration of the network node. The RAN node transmits, to one or more UEs including a first UE, a paging configuration including the DRX parameters and the mapping. The RAN node receives, from the CN, a request to page the first UE. The assigned WUS group and the WUS resource can be determined in response to the request. The request to page the first UE can also include the PP indication assigned to the first UE. The RAN node determines the following based on the DRX parameters and a second identifier associated with the UE: a paging narrowband, a paging frame (PF), and a paging occasion (PO) within the paging frame. The WUS resource is located within the paging narrowband and the time period of the WUS resource ends at the beginning of a WUS gap before the paging occasion. The RAN node transmits, during a time period of the WUS resource, a group WUS associated with the assigned WUS group.
WO 2021/027427 A1 describes that a terminal device receives a first parameter from a core network device, where the first parameter corresponds to first WUS configuration information in at least one piece of WUS configuration information, and the first WUS configuration information includes information about a first WUS time-frequency resource; the terminal device determines the first WUS time-frequency resource based on the first parameter; and the terminal device receives a first WUS from an access network device on the first WUS time-frequency resource, where the first WUS is used to wake up the terminal device.
US 2020/396687 A1 describes a method for receiving a paging signal, the method comprising the steps of: determining index information indicating a WUS resource; and monitoring a WUS on the basis of the determined index information, wherein, when a UE supports machine type communication (MTC), the index information indicating the WUS resource is determined on the basis of identification information of the UE, parameters related to a DRX cycle of the UE, information related to the number of paging narrowbands, and information related to the number of UE groups for the WUS.

### SUMMARY

This application provides a communication method and a communication apparatus, to reduce power consumption of a terminal device in a paging process. The invention is defined by the independent claims. Advantageous embodiments of the invention are given by the dependent claims.

According to a first aspect, this application provides a communication method. The method may be performed by an access network device or a chip used in the access network device. The following uses an example in which the method is performed by the access network device for description. The method includes: The access network device sends first indication information to a terminal device, where the first indication information indicates one or more wake-up resources; the access network device receives second indication information from a core network device, where the second indication information indicates to wake up the terminal device; the access network device determines a first wake-up resource from the one or more wake-up resources; and the access network device sends wake-up information to the terminal device on the first wake-up resource, where the wake-up information is used to wake up the terminal device to receive a paging message or is used to wake up the terminal device to initiate random access.

In this application, the access network device may configure the one or more wake-up resources for the terminal device, and determine the first wake-up resource from the one or more wake-up resources, so that when receiving an indication (namely, the second indication information), from the core network device, indicating to wake up the terminal device, the access network device sends the wake-up information to the terminal device on the first wake-up resource to wake up the terminal device. Correspondingly, when determining that there is wake-up signal coverage, the terminal device may determine the first wake-up resource from the one or more wake-up resources configured by the access network device, and receive the wake-up information on the first wake-up resource to enable a main circuit module to receive the paging message, or initiate the random access. After receiving a wake-up resource configuration of the access network device, the terminal device may disable the main circuit module to keep in a sleep state, and wake up, after receiving the wake-up information, the main circuit module to receive the paging message and the like. Therefore, energy saving of the terminal device can be implemented, and power consumption of the terminal device in a paging process can be reduced.

In a possible implementation, that the access network device determines a first wake-up resource based on a plurality of wake-up resources includes: The access network device determines the first wake-up resource based on at least one of a maximum quantity of wake-up resources, an identifier of the terminal device, and a paging parameter.

In this implementation, when the access network device configures a plurality of (to be specific, two or more) wake-up resources for the terminal device, the access network device and the terminal device determine, from the plurality of wake-up resources according to a same rule, a wake-up resource (namely, the first wake-up resource) used by the terminal device. Therefore, resource position alignment between the access network device and the terminal device can be implemented, so that the terminal device can subsequently receive corresponding wake-up information. This helps improve communication reliability.

In a possible implementation, the access network device determines, based on the at least one of the maximum quantity of wake-up resources, the identifier of the terminal device, and the paging parameter, that the first wake-up resource satisfies the following formula: $Index = floor \left(UE_ID/\left(N*Ns\right)\right) mod Max_resourced .$

Index represents an index of the first wake-up resource, UE_ID represents the identifier of the terminal device, Max_resourced represents the maximum quantity of wake-up resources, and N and Ns represent paging parameters. N is a total quantity of paging frames in one paging cycle, and Ns is a quantity of paging opportunities in one paging frame.

In this implementation, the index of the first wake-up resource is determined based on the identifier of the terminal device, the maximum quantity of wake-up resources, and the paging parameter. This is highly operable and easy to be implemented.

In a possible implementation, the access network device determines, based on the at least one of the maximum quantity of wake-up resources, the identifier of the terminal device, and the paging parameter, that the first wake-up resource satisfies the following formula: $Index = floor \left(UE_ID mod Max_resourced\right) .$

Index represents an index of the first wake-up resource, UE_ID represents the identifier of the terminal device, and Max_resourced represents the maximum quantity of wake-up resources.

In this implementation, the index of the first wake-up resource is determined based on the identifier of the terminal device and the maximum quantity of wake-up resources. This increases diversity of wake-up resource determining manners.

The method further includes: The access network device sends third indication information to the core network device, where the third indication information indicates that the access network device supports frequency division multiplexing of a wake-up resource.

In this implementation, the access network device reports, to the core network device, a capability of supporting resource frequency division multiplexing, so that the core network device can configure a same wake-up resource position or close wake-up resource positions for access network devices in a same area or adjacent areas.

In a possible implementation, the method further includes: The access network device sends fourth indication information to the core network device, where the fourth indication information indicates the first wake-up resource.

In this implementation, the access network device reports the first wake-up resource to the core network device, so that when subsequently initiating the paging message, the core network device can carry the first wake-up resource and configure the first wake-up resource for the access network device. Therefore, the access network device may send, based on configuration information of the first wake-up resource, the wake-up information at a corresponding first wake-up resource position to wake up the terminal.

Before the access network device sends the first indication information to the terminal device, the method further includes: The access network device receives fifth indication information from the terminal device, where the fifth indication information indicates that the terminal device supports frequency division multiplexing of a wake-up resource.

In this implementation, the access network device reports, to the core network device, a capability of supporting resource frequency division multiplexing, so that the access network device can configure the wake-up resource for the terminal device based on a capability supported by the terminal device, and page the terminal device after subsequently waking up the terminal device based on the wake-up information.

According to a second aspect, this application provides a communication method. The method may be performed by a terminal device or a chip used in the terminal device. The following uses an example in which the method is performed by the terminal device for description. The method includes: The terminal device receives first indication information from an access network device when the terminal device detects a wake-up signal or a detected wake-up signal is greater than or equal to a preset threshold, where the first indication information indicates one or more wake-up resources; the terminal device determines a first wake-up resource based on the one or more wake-up resources; the terminal device receives wake-up information from the access network device on the first wake-up resource; and the terminal device receives a paging message or initiates random access.

In this application, in a case in which there is wake-up signal coverage, after receiving a wake-up resource configuration of the access network device, the terminal device may disable a main circuit module to keep in a sleep state, and wake up, after receiving the wake-up information on the first wake-up resource, the main circuit module to monitor paging. Compared with a related technology in which the terminal device needs to always enable the main circuit module to receive a system message or the paging message, energy saving of the terminal device can be implemented, and power consumption of the terminal device in a paging process can be reduced.

In a possible implementation, that the terminal device determines a first wake-up resource based on a plurality of wake-up resources includes: The terminal device determines the first wake-up resource based on at least one of a maximum quantity of wake-up resources, an identifier of the terminal device, and a paging parameter.

In a possible implementation, the terminal device determines, based on a plurality of wake-up resources, that the first wake-up resource satisfies the following formula: $Index = floor \left(UE_ID/\left(N*Ns\right)\right) mod Max_resourced .$

Index represents an index of the first wake-up resource, UE_ID represents the identifier of the terminal device, Max_resourced represents the maximum quantity of wake-up resources, and N and Ns represent paging parameters. N is a total quantity of paging frames in one paging cycle, and Ns is a quantity of paging opportunities in one paging frame.

In a possible implementation, the terminal device determines, based on a plurality of wake-up resources, that the first wake-up resource satisfies the following formula: $Index = floor \left(UE_ID mod Max_resourced\right) .$

Index represents an index of the first wake-up resource, UE_ID represents the identifier of the terminal device, and Max_resourced represents the maximum quantity of wake-up resources.

Before the terminal device receives the first indication information from the access network device, the method further includes: The terminal device sends fifth indication information to the access network device, where the fifth indication information indicates that the terminal device supports frequency division multiplexing of a wake-up resource.

According to a third aspect, this application provides a communication method. The method may be performed by a terminal device or a chip used in the terminal device. The following uses an example in which the method is performed by the terminal device for description. The method includes: The terminal device is woken up when the terminal device detects no wake-up signal or a detected wake-up signal is less than a preset threshold; the terminal device receives a system message, where the system message includes one or more wake-up resources; the terminal device determines a first wake-up resource based on the one or more wake-up resources; the terminal device receives wake-up information from an access network device on the first wake-up resource; and the terminal device receives a paging message, initiates random access, or keeps in a wake-up state.

In this application, in a case in which there is no wake-up signal coverage or there is poor coverage, the terminal device is woken up to receive the system message that carries a wake-up resource configuration, so that the terminal device can reselect a new wake-up resource (namely, the first wake-up resource) based on the resource configuration, to implement resource alignment with a network side. This further ensures that the terminal device can still continuously monitor the wake-up information in a scenario without continuous coverage.

In a possible implementation, that the terminal device determines a first wake-up resource based on a plurality of wake-up resources includes: The terminal device determines the first wake-up resource based on at least one of a maximum quantity of wake-up resources, an identifier of the terminal device, and a paging parameter.

In a possible implementation, the terminal device determines, based on a plurality of wake-up resources, that the first wake-up resource satisfies the following formula: $Index = floor \left(UE_ID/\left(N*Ns\right)\right) mod Max_resourced .$

Index represents an index of the first wake-up resource, UE_ID represents the identifier of the terminal device, Max_resourced represents the maximum quantity of wake-up resources, and N and Ns represent paging parameters. N is a total quantity of paging frames in one paging cycle, and Ns is a quantity of paging opportunities in one paging frame.

In a possible implementation, the terminal device determines, based on a plurality of wake-up resources, that the first wake-up resource satisfies the following formula: $Index = floor \left(UE_ID mod Max_resourced\right) .$

Index represents an index of the first wake-up resource, UE_ID represents the identifier of the terminal device, and Max_resourced represents the maximum quantity of wake-up resources.

According to a fourth aspect, this application provides a communication system. The communication system includes the access network device and the core network device in the first aspect. The core network device is configured to send second indication information to the access network device, where the second indication information indicates to wake up a terminal device.

The core network device is further configured to receive third indication information from the access network device, where the third indication information indicates that the access network device supports frequency division multiplexing of a wake-up resource. Alternatively, the core network device is further configured to receive fourth indication information from the access network device, where the fourth indication information indicates a first wake-up resource.

In a possible implementation, the communication system further includes the terminal device in the second aspect and/or the third aspect.

According to a fifth aspect, this application provides a communication apparatus. For beneficial effects, refer to descriptions of the first aspect. Details are not described herein again. The communication apparatus has functions of implementing behavior in the method example in the first aspect. The functions may be implemented by hardware, or may be implemented by hardware executing corresponding software. The hardware or the software includes one or more modules corresponding to the foregoing functions. In a possible design, the apparatus includes: a transceiver unit, configured to send first indication information to a terminal device, where the first indication information indicates one or more wake-up resources, and configured to receive second indication information from a core network device, where the second indication information indicates to wake up the terminal device; and a processing unit, configured to determine a first wake-up resource based on the one or more wake-up resources. The transceiver unit is configured to send wake-up information to the terminal device on the first wake-up resource. The wake-up information is used to wake up the terminal device to receive a paging message or is used to wake up the terminal device to initiate random access. The units may perform corresponding functions in the method example in the first aspect. For details, refer to detailed descriptions in the method example. Details are not described herein again.

According to a sixth aspect, this application provides a communication apparatus. For beneficial effects, refer to descriptions of the second aspect. Details are not described herein. The communication apparatus has functions of implementing behavior in the method example in the second aspect. The functions may be implemented by hardware, or may be implemented by hardware executing corresponding software. The hardware or the software includes one or more modules corresponding to the foregoing functions. In a possible design, the apparatus is a terminal device. The apparatus includes: a transceiver unit, configured to: receive first indication information from an access network device when a wake-up signal is detected or a detected wake-up signal is greater than or equal to a preset threshold, where the first indication information indicates one or more wake-up resources; and a processing unit, configured to determine a first wake-up resource based on the one or more wake-up resources. The transceiver unit is configured to receive wake-up information from the access network device on the first wake-up resource. The transceiver unit is configured to receive a paging message or initiate random access. The units may perform corresponding functions in the method example in the second aspect. For details, refer to detailed descriptions in the method example. Details are not described herein.

According to a seventh aspect, this application provides a communication apparatus. For beneficial effects, refer to descriptions of the third aspect. Details are not described herein again. The communication apparatus has functions of implementing behavior in the method example in the third aspect. The functions may be implemented by hardware, or may be implemented by hardware executing corresponding software. The hardware or the software includes one or more modules corresponding to the foregoing functions. In a possible design, the apparatus includes: a transceiver unit, configured to wake up a terminal device when no wake-up signal is detected or a detected wake-up signal is less than a preset threshold, and configured to receive a system message, where the system message includes one or more wake-up resources; and a processing unit, configured to determine a first wake-up resource based on the one or more wake-up resources. The transceiver unit is configured to receive wake-up information from an access network device on the first wake-up resource, and is configured to receive a paging message, initiate random access, or keep in a wake-up state.

According to an eighth aspect, this application provides a communication apparatus. The communication apparatus may be the access network device in the method embodiments or a chip disposed in the access network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the access network device in the method embodiments.

According to a ninth aspect, a communication apparatus is provided. The communication apparatus may be the terminal device in the second aspect or the third aspect or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the method embodiments.

According to a tenth aspect, a computer program product is provided. The computer program product includes computer program code. When the computer program code is run, the method performed by the terminal device in the foregoing aspects is performed.

According to an eleventh aspect, a computer program product is provided. The computer program product includes computer program code. When the computer program code is run, the method performed by the access network device in the foregoing aspects is performed.

According to a twelfth aspect, this application provides a chip system. The chip system includes a processor, and the processor is configured to implement functions of the terminal device in the methods in the foregoing aspects. In a possible design, the chip system further includes a memory, and the memory is configured to store program instructions and/or data. The chip system may include a chip, or may include a chip and another discrete device.

According to a thirteenth aspect, this application provides a chip system. The chip system includes a processor, and the processor is configured to implement functions of the access network device in the methods in the foregoing aspects. In a possible design, the chip system further includes a memory, and the memory is configured to store program instructions and/or data. The chip system may include a chip, or may include a chip and another discrete device.

According to a fourteenth aspect, this application provides a computer-readable storage medium. The computer-readable storage medium stores a computer program. When the computer program is run, the method performed by the terminal device in the foregoing aspects is implemented.

According to a fifteenth aspect, this application provides a computer-readable storage medium. The computer-readable storage medium stores a computer program. When the computer program is run, the method performed by the access network device in the foregoing aspects is implemented.

### BRIEF DESCRIPTION OF DRAWINGS

FIG. 1 is a schematic of a network architecture of a communication system;
FIG. 2 is a schematic flowchart of a communication method according to an embodiment of this application;
FIG. 3 is another schematic flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

The following clearly and completely describes technical solutions in embodiments of this application with reference to the accompanying drawings in embodiments of this application.

In descriptions of this application, unless otherwise specified, "/" represents "or". For example, A/B may represent A or B. A term "and/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, a term such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

The technical solutions in embodiments of this application may be applied to various communication systems, for example, a long term evolution (long term evolution, LTE) system, a wireless fidelity (wireless fidelity, Wi-Fi) system, a worldwide interoperability for microwave access (worldwide interoperability for microwave access, WiMAX) communication system, a 5^{th} generation (5^{th} generation, 5G) system or a new radio (new radio, NR), and a future communication system. This is not limited herein.

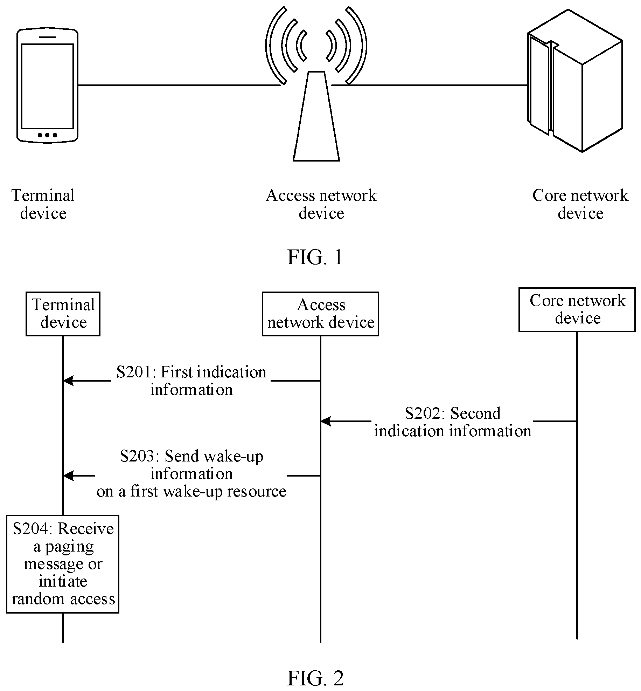

FIG. 1 is a schematic of a network architecture of a communication system. The communication system may include one or more core network devices (only one is shown), one or more access network devices (only one is shown), and one or more terminal devices (only one is shown). FIG. 1 is merely a schematic, and does not constitute a limitation on a scenario to which the technical solutions provided in this application are applicable. The terminal device is connected to the access network device in a wireless manner, and the access network device is connected to the core network device in a wireless or wired manner. The core network device and the access network device may be different independent physical devices; functions of the core network device and logical functions of the access network device are integrated into a same physical device; or some functions of the core network device and some functions of the access network device are integrated into a same physical device. It should be noted that FIG. 1 is merely an example, and quantities of core network devices, access network devices, and terminal devices included in the mobile communication system are not limited in this embodiment of this application. In some embodiments, the communication system may further include another access network device, for example, a wireless relay device or a wireless backhaul device.

It should be noted that the terminal device in this embodiment of this application may include a main circuit module and a WUR module. In other words, the terminal device in this embodiment of this application includes a terminal device having a WUR capability. The main circuit module needs power supply to implement a process such as receiving a synchronization signal and a system message sent by the access network device. Therefore, the WUR module may be disposed in the terminal device to reduce power consumption of the terminal device. Because the WUR module can also receive information without power supply. Therefore, when the terminal device does not need to work, power supply to the main circuit module and the WUR module of the terminal device may be disconnected, to save energy consumption of the terminal device as much as possible. It should be noted that when the main circuit module and the WUR module of the terminal device are in a power-off state. It is similar to that the terminal device is in a shutdown state. In this case, the terminal device (that is, the WUR module of the terminal device) receives only information (referred to as wake-up information in this specification) used to trigger wake-up of the main circuit module of the terminal device, and does not receive a paging message, a synchronization message, the system message, a reference signal, or the like from the access network device.

The terminal device includes a device that provides a user with voice and/or data connectivity, for example, may include a handheld device having a wireless connection function, or a processing device connected to a wireless modem. The terminal device may communicate with a core network by using a radio access network. The terminal device may include a user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, a user equipment, or the like. For example, the terminal device may include a mobile phone (or referred to as a "cellular" phone), a computer having a mobile terminal device, a portable, pocket-sized, handheld, or computer built-in mobile apparatus, or the like, such as a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), and the like. The terminal device may further include a restricted device, for example, a device with low power consumption, a device with a limited storage capability, or a device with a limited computing capability.

The access network device is an access device that the terminal device accesses the mobile communication system in a wireless manner. The access network device may be a radio access network (radio access network, RAN). The RAN may include a next-generation base station (generation NodeB, gNB), an evolved NodeB (evolved NodeB, eNB), a next-generation evolved NodeB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, and the like in a 5G communication system. This is not limited herein.

The RAN may further include one or more central units (central units, CUs), one or more distributed units (distributed units, DUs), or one or more CUs and one or more DUs. For example, functions of the CU may be implemented by one entity or different entities. For example, the functions of the CU are further divided, that is, a control plane and a user plane are separated and implemented via different entities, which are respectively a control plane CU entity (that is, a CU-CP entity) and a user plane CU entity (that is, a CU-UP entity). The CU-CP entity and the CU-UP entity may be coupled to the DU, and jointly complete the functions of the access network device. In this way, some functions of a radio access network device may be implemented via a plurality of network function entities. These network function entities may be network elements in a hardware device, may be software functions run on dedicated hardware, or may be virtualized functions instantiated on a platform (for example, a cloud platform).

In this embodiment of this application, an apparatus configured to implement the functions of the RAN may be the RAN, or may be an apparatus that can support the RAN in implementing the functions, for example, a chip system or a combination device or a part that can implement the functions of the access network device. The apparatus may be installed in the RAN. In this embodiment of this application, the chip system may include a chip, or may include a chip and another discrete device.

The core network (core network, CN) device is configured to implement functions such as mobility management, data processing, session management, policy and charging. Names of devices that implement functions of the core network in systems of different access technologies may be different. This is not limited in this application. A 5G network is used as an example. Logical network elements of a 5G core network (5G core network, 5GC) include an access and mobility management function (access and mobility management function, AMF), a session management function (session management function, SMF), a user plane function (user plane function, UPF), and the like. An apparatus configured to implement the functions of the core network device may be the core network device, or may be an apparatus that can support the core network device in implementing the functions, for example, a chip system or a combination device or a part that can implement the functions of the core network device. The apparatus may be installed in the core network device.

The following explains and describes related technical features in embodiments of this application.

### 1. Paging (Paging)

In a mobile communication system, paging from a 5GC is referred to as 5GC paging. When downlink data arrives at a UE in an RRC idle (RRC _IDLE) state, the 5GC triggers the paging for the UE. A final paging message is delivered by a RAN to the UE over an air interface. The paging is a process in which the RAN periodically sends the paging message to the UE to notify the UE to perform a corresponding operation or update a related parameter. The UE can receive the paging message when the UE is in the RRC_IDLE state, an RRC inactive (RRC_INACTIVE) state, or an RRC connected (RRC_CONNECTED) state.

When the UE is in connection management (connection management, CM)-idle+registration management (registration management, RM)-registered (CM-IDLE+RM-REGISTERED) states, and a network needs to send data to the UE, an AMF initiates the paging, and the UE performs a service request (Service Request) process response after the paging ends.

When the UE is in connection management-connected+RRC inactive (CM-CONNECTED+RRC Inactive) states, the paging is initiated by a RAN side. The AMF provides RRC inactive assistance information (RRC Inactive Assistance Information) for the RAN to determine whether the UE can be in the RRC inactive state.

### 2. Multi-carrier paging mechanism

The multi-carrier paging mechanism is proposed to support paging capacity expansion. Specifically, an access network device allocates an access weight to each carrier. After receiving a configuration, the terminal device determines, according to a preset formula, a minimum carrier N that satisfies the formula to receive the paging message.

### 3. Wake-up radio (wake-up radio, WUR)

A concept of the wake-up radio is that when a communication main circuit module is in a sleep state, a wireless communication station enables only one wake-up receiver with ultra-low power consumption to monitor a wake-up packet. In other words, in the sleep state, only the wake-up receiver works, and the communication main circuit module enters an energy saving state. Therefore, energy consumption can be reduced. Further, after receiving the wake-up packet, the wake-up receiver may wake up the communication main circuit module in the sleep state to complete receiving and sending of data and signaling. It should be noted that because the wake-up packet is simply modulated (where for example, binary on-off keying (on-off keying, OOK) is performed on the wake-up packet) and a channel is narrow, power consumption and costs of the wake-up receiver can be reduced. In a Wi-Fi system, the WUR refers to introducing a low power (low power, LP) interface for a station (Station, STA) based on a conventional 802.11 main circuit module (main radio).

It should be noted that the network may send the paging message to terminal devices in the RRC idle state, the RRC inactive state, and the RRC connected state, to notify the terminal devices to perform corresponding operations or update related parameters. In a current paging procedure, because the terminal device needs to monitor each paging occasion (paging occasion, PO) and receive the paging message to determine whether the terminal device is paged, a large amount of energy is consumed. In addition, the multi-carrier paging mechanism is added to support the paging capacity expansion. In the multi-carrier paging mechanism, the access network device needs to configure the access weight for each carrier by using a system message, so that the terminal device can determine, based on a received weight configuration and according to a formula defined in a communication protocol, a carrier for receiving the paging message. In the multi-carrier paging mechanism, because the terminal device needs to enable the main circuit module to receive the system message, a problem of high power consumption of the terminal device still exists.

In view of this, embodiments of this application provide a communication method. In the method, an access network device may configure one or more wake-up resources for a terminal device, and determine a first wake-up resource from the one or more wake-up resources, so that when receiving an indication (namely, second indication information), from a core network device, indicating to wake up the terminal device, the access network device sends wake-up information to the terminal device on the first wake-up resource to wake up the terminal device. Correspondingly, the terminal device may also determine the first wake-up resource from the one or more wake-up resources configured by the access network device, and receive the wake-up information on the first wake-up resource to enable a main circuit module to receive a paging message, or initiate random access. It should be noted that, after receiving a wake-up resource configuration of the access network device, the terminal device may disable the main circuit module to keep in a sleep state, and wake up, after receiving the wake-up information, the main circuit module to receive the paging message and the like. Therefore, energy saving of the terminal device can be implemented, and power consumption of the terminal device in a paging process can be reduced.

It should be noted that the first wake-up resource in embodiments of this application is a resource position used by the terminal device to monitor the wake-up information.

The following describes in detail the communication method and a communication apparatus that are provided in this application.

FIG. 2 is a schematic flowchart of a communication method according to an embodiment of this application. The method may be performed by a terminal device and an access network device, or may be performed by a chip in the terminal device and a chip in the access network device. The access network device in FIG. 2 may be the access network device in FIG. 1, and the terminal device in FIG. 2 may be the terminal device in FIG. 1. The method shown in FIG. 2 may include the following operations.

S201: When determining that there is wake-up signal coverage, the terminal device receives first indication information from the access network device.

In some feasible implementations, the terminal device determines that there is wake-up signal coverage when the terminal device detects no wake-up signal or a detected wake-up signal is greater than or equal to a preset threshold. In other words, when the terminal device detects the wake-up signal or the detected wake-up signal is greater than or equal to the preset threshold, the terminal device may determine that there is no wake-up signal coverage. When determining that there is no wake-up signal coverage, the terminal device may receive the first indication information from the access network device. Correspondingly, the access network device sends the first indication information to the terminal device. The first indication information indicates one or more wake-up resources, and the one or more wake-up resources may include a first wake-up resource.

It should be noted that the wake-up resource in this application may also be described as a low power wake-up radio resource (low power WUS resource, LP WUS resource), and wake-up information in this application may also be described as low power wake-up information. This is not limited herein. When the first indication information indicates a plurality of wake-up resources, the plurality of wake-up resources may be on different carriers, the plurality of wake-up resources may be on different BWPs, the plurality of wake-up resources are different frequency domain positions on one BWP, or the like. This is not limited herein. The first indication information may be dedicated signaling, for example, an RRC connection release message or an RRC reconfiguration message. This is not limited herein. Alternatively, the first indication information may be a system message, for example, a system information block 1 (system information block, SIB1) or a SIB2. This is not limited herein.

Specifically, the terminal device may determine, based on measurement or depending on whether a data type (for example, a beacon (beacon) signal) is successfully received, whether there is wake-up signal coverage. That there is wake-up signal coverage may be understood as that the wake-up signal is detected or the detected wake-up signal is greater than or equal to the preset threshold. That there is no wake-up signal coverage may be understood as that no wake-up signal is detected or the detected wake-up signal is less than the preset threshold. For example, a coverage determining method may include the following two manners.
1. The terminal device may perform measurement based on a WUS signal. If a measurement result is greater than or equal to the preset threshold, it indicates that there is coverage; otherwise, there is no coverage.
2. Alternatively, the terminal device may perform detection based on the beacon signal. If no beacon signal is received within a period of time or the beacon is successfully decoded, it indicates that there is no coverage. If the beacon signal is received, it indicates that there is coverage.

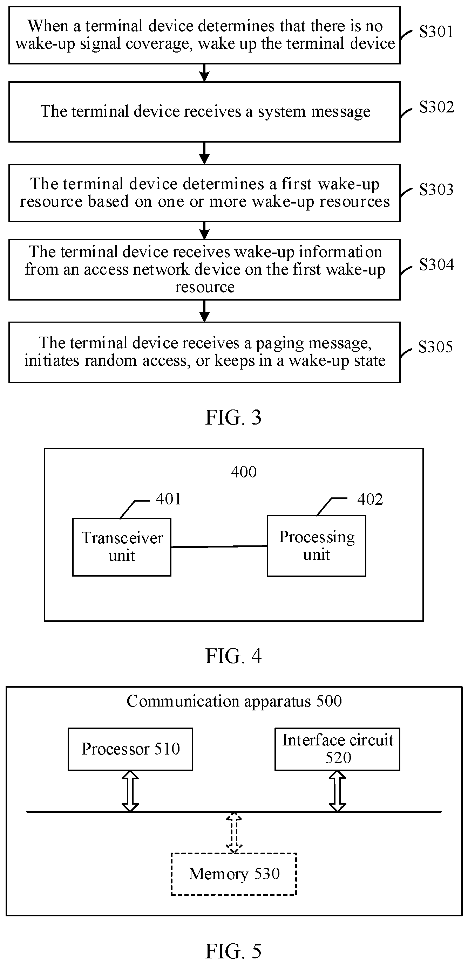

Generally, when wake-up signal coverage is detected, it indicates that the terminal device may be woken up in an implementation of the wake-up information sent by the access network device. When no wake-up signal coverage is detected, it indicates that the terminal device cannot receive the wake-up information sent by the access network device, and it is naturally impossible to wake up the terminal device by using the wake-up information. Therefore, in this case, the terminal device may be directly woken up. In other words, an objective of the detection performed by the terminal device is mainly to determine whether the terminal device can be woken up in a manner in which the terminal device receives the wake-up information. It may be understood that an implementation in which the terminal device is directly woken up when the terminal device detects no wake-up signal or the detected wake-up signal is less than the preset threshold is described in detail in a subsequent procedure shown in FIG. 3. Details are not described herein. The following mainly describes in detail a solution in which the terminal device may be woken up based on the wake-up information when the terminal device detects the wake-up signal or the detected wake-up signal is greater than or equal to the preset threshold.

It should be noted that a manner in which the first indication information indicates the wake-up resource may be that the first indication information indicates an index of the wake-up resource, and/or indicates specific frequency domain configuration information. For example, the first indication information may indicate at least one of the following information: a frequency domain position, a start resource position, a quantity of continuous RBs, an end resource position, and the like of the wake-up resource. This is not limited herein.

It should be noted that, that the access network device sends the first indication information to the terminal device may be specifically understood as follows: The access network device sends the first indication information to the terminal device by using an RRC connection established between the access network device and the terminal device. In other words, the terminal device needs to enter an RRC connected state to receive the first indication information from the access network device, or the terminal device needs to enable a main circuit module to receive the first indication information from the access network device.

Before the access network device sends the first indication information to the terminal device, the access network device further receives fifth indication information sent by the terminal device by using the RRC connection. The fifth indication information indicates that the terminal device supports frequency division multiplexing of a wake-up resource. In other words, when the terminal device is in the RRC connected state, the terminal device may report, to the access network device, a capability of supporting the frequency division multiplexing of the wake-up resource, to request the access network device to configure the wake-up resource for the terminal device. Therefore, after receiving the fifth indication information from the terminal device, the access network device may send the first indication information to the terminal device in response to the fifth indication information, to configure the one or more wake-up resources for the terminal device.

It may be understood that the one or more wake-up resources configured by the access network device for the terminal device may be determined from at least one wake-up resource configured by a core network device for the access network device. In other words, the core network may first configure the at least one wake-up resource for the access network device, and then the access network device may configure the wake-up resource for the terminal device based on a received wake-up resource configuration from the core network device.

For example, the core network device may alternatively send the wake-up resource configuration to the access network device after receiving third indication information from the access network device. The third indication information indicates that the access network device supports frequency division multiplexing of a wake-up resource. In other words, the access network device may report, to the core network device, the capability of supporting the frequency division multiplexing of the wake-up resource, so that the core network device can configure the at least one wake-up resource for access network devices (for example, in a plurality of neighboring cells) in a specific area. Generally, the core network device configures a same or close frequency domain position of the at least one wake-up resource for the access network device in the specific area. Therefore, it can be ensured that a plurality of wake-up resources subsequently allocated by the access network device to the terminal device are also the same or close. In this manner, when freely moving in the specific area, the terminal device can always receive the wake-up information.

It should be noted that after receiving the first indication information from the access network device by using the RRC connection, the terminal device may enter an RRC idle state from the RRC connected state. In other words, the terminal device may disable the main circuit module, to reduce power consumption of the terminal device.

It should be noted that when the first indication information sent by the access network device to the terminal device indicates one wake-up resource, the wake-up resource is the first wake-up resource. When the first indication information sent by the access network device to the terminal device indicates a plurality of wake-up resources, the access network device and the terminal device may determine the first wake-up resource from the plurality of wake-up resources according to a same rule or a same formula, to implement resource alignment.

It should be noted that the access network device may further send fourth indication information to the core network device. The fourth indication information indicates the first wake-up resource. A time point at which the access network device sends the fourth indication information to the core network device may not be limited. For example, the time point at which the fourth indication information is sent may be after the access network device sends the first indication information, after the terminal device is released to enter the idle state, when the terminal device is released to enter the idle state, or before the terminal device is released to enter the idle state. In other words, the access network device may send, to the core network device for storage, the first wake-up resource used by the terminal device, so that when subsequently initiating a paging message, the core network device carries the first wake-up resource and configures the first wake-up resource for the access network device, and the access network device can further send the wake-up information on the corresponding first wake-up resource based on a first wake-up resource configuration to wake up the terminal device. Alternatively, the access network device may send, to the core network device for storage, the one or more wake-up resources configured for the terminal device, so that when subsequently initiating a paging message, the core network device carries the one or more wake-up resources and configures the one or more wake-up resources to the access network device, and the access network device can further determine the first wake-up resource based on a configuration of the one or more wake-up resources, and send the wake-up information on the first wake-up resource to wake up the terminal device. For an implementation of how the terminal device or the access network device specifically determines the first wake-up resource from the one or more wake-up resources, refer to the following descriptions. Details are not described herein again.

S202: The access network device receives second indication information from the core network device.

In some feasible implementations, the core network device sends the second indication information to the access network device. Correspondingly, the access network device receives the second indication information from the core network device. The second indication information indicates to wake up the terminal device.

For example, the second indication information may further include configuration information of the first wake-up resource. Therefore, the access network device may send the wake-up information to the terminal device on a corresponding resource based on the configuration information.

S203: The terminal device receives the wake-up information from the access network device on the first wake-up resource.

In some feasible implementations, the access network device may send the wake-up information to the terminal device based on the received second indication information. The access network device may send the wake-up information to the terminal device on the first wake-up resource. Correspondingly, the terminal device may determine the first wake-up resource from the one or more wake-up resources indicated by the first indication information, and receive the wake-up information from the access network device on the first wake-up resource. The wake-up information may include information such as an identifier of the terminal device. Therefore, after receiving the wake-up information, the terminal device may decode the wake-up message, to determine whether the wake-up message includes the identifier of the terminal device. Generally, if the wake-up message does not include the identifier of the terminal device, the terminal device ignores the wake-up message. If the wake-up message includes the identifier of the terminal device, the terminal device may wake up the main circuit module based on the received wake-up information, to subsequently receive the paging message or initiate random access.

Generally, when the first indication information indicates only one wake-up resource, the terminal device may determine, as the first wake-up resource used by the terminal device, the wake-up resource indicated by the first indication information. When the first indication information indicates a plurality of wake-up resources, the terminal device may determine the first wake-up resource based on at least one of a maximum quantity of wake-up resources, the identifier of the terminal device, information about a probability that the terminal receives paging, and a paging parameter. Herein, the information about the probability that the terminal receives paging may be understood as a probability that the terminal device is paged on a wake-up resource. For example, a probability that the terminal device is paged on a wake-up resource 1 is 2/5, and a probability that the terminal device is paged on a wake-up resource 2 is 3/5. Alternatively, the information about the probability that the terminal receives paging may be understood as a weight for the terminal device to be paged on a wake-up resource. For example, assuming that a weight of the first wake-up resource is A, and a weight of a second wake-up resource is B, a probability that the terminal device is paged on the first wake-up resource is equivalent to A/A+B. The maximum quantity of wake-up resources, the identifier of the terminal device, the information about the probability that the terminal receives paging, and the paging parameter may be obtained from the access network device, may be specified in a protocol, or may be obtained from the core network device. This is not limited herein. It may be understood that the identifier of the terminal device may be 5G-S-TMSI mod 1024, 5G-S-TMSI mod 4096, 5G-S-TMSI, another type of identifier, or the like. This is not limited herein. The S-TMSI is a temporary mobile subscriber identity (temporary mobile subscriber identity).

Specifically, the terminal device determines, based on the at least one of the maximum quantity of wake-up resources, the identifier of the terminal device, and the paging parameter, that the first wake-up resource may satisfy the following formula 1: $Index = floor \left(UE_ID/\left(N*Ns\right)\right) mod Max_resourced .$

Index represents an index of the first wake-up resource, UE_ID represents the identifier of the terminal device, Max_resourced represents the maximum quantity of wake-up resources, and N and Ns represent paging parameters in a conventional cellular technology. N is a total quantity of paging frames in one paging cycle, and Ns is a quantity of paging opportunities in one paging frame.

Alternatively, the terminal device determines, based on the at least one of the maximum quantity of wake-up resources, the identifier of the terminal device, and the paging parameter, that the first wake-up resource may satisfy the following formula 2: $Index = floor \left(UE_ID mod Max_resourced\right) .$

Index represents an index of the first wake-up resource, UE_ID represents the identifier of the terminal device, and Max_resourced represents the maximum quantity of wake-up resources.

Correspondingly, for the access network device, a manner in which the access network device determines the first wake-up resource may further include the following several implementations. Specifically, in a possible implementation, when the first indication information indicates one wake-up resource, the access network device may determine, as the first wake-up resource used by the terminal device, the wake-up resource indicated by the first indication information, and therefore may send the wake-up information to the terminal device on the first wake-up resource. In another possible implementation, when the first indication information indicates a plurality of wake-up resources, the access network device may determine the first wake-up resource based on at least one of the maximum quantity of wake-up resources, the identifier of the terminal device, and the paging parameter, and further determine to send the wake-up information to the terminal device on the first wake-up resource. Specifically, the access network device determines, based on the at least one of the maximum quantity of wake-up resources, the identifier of the terminal device, and the paging parameter, that the first wake-up resource may satisfy the foregoing formula 1 or formula 2. Details are not described herein again.

S204: The terminal device receives the paging message or initiates the random access.

In some feasible implementations, after being woken up, the terminal device may receive the paging message, initiate the random access, or the like. This is not limited herein. It should be noted that an objective of initiating the random access by the terminal device may be to request to update the wake-up resource configuration. In other words, the access network device reconfigures the wake-up resource for the terminal device.

In this application, the access network device may configure the one or more wake-up resources for the terminal device, and determine the first wake-up resource from the one or more wake-up resources, so that when receiving an indication (namely, the second indication information), from the core network device, indicating to wake up the terminal device, the access network device sends the wake-up information to the terminal device on the first wake-up resource to wake up the terminal device. Correspondingly, the terminal device may also determine the first wake-up resource from the one or more wake-up resources configured by the access network device, and receive the wake-up information on the first wake-up resource to enable the main circuit module to receive the paging message, or initiate the random access. It should be noted that, after receiving a wake-up resource configuration of the access network device, the terminal device may disable the main circuit module to keep in a sleep state, and wake up, after receiving the wake-up information, the main circuit module to receive the paging message and the like. Therefore, energy saving of the terminal device can be implemented, and power consumption of the terminal device in a paging process can be reduced.

FIG. 3 is another schematic flowchart of a communication method according to an embodiment of this application. As shown in FIG. 3, the communication method includes the following steps S301 to S305.

S301: When a terminal device determines that there is no wake-up signal coverage, wake up the terminal device.

In some feasible implementations, the terminal device determines that there is no wake-up signal coverage when the terminal device detects no wake-up signal or a detected wake-up signal is less than a preset threshold. In other words, when the terminal device detects no wake-up signal or the detected wake-up signal is less than the preset threshold, it may be determined that there is no wake-up signal coverage, and therefore the terminal device may be directly woken up. Herein, waking up the terminal device may be understood as enabling a main circuit module of the terminal device. In other words, when detecting no wake-up signal coverage, the terminal device may be directly woken up. Specifically, the terminal device may perform measurement based on a WUS signal. If a measurement result is greater than or equal to the preset threshold, it is determined that there is coverage; otherwise, there is no coverage. Alternatively, the terminal device may perform detection based on a beacon signal. If no beacon signal is received within a period of time, it indicates that there is no coverage. If the beacon signal is received, it indicates that there is coverage.

S302: The terminal device receives a system message.

In some feasible implementations, the terminal device receives the system message. The system message may include one or more wake-up resources. It may be understood that, the terminal device keeps moving. Therefore, when the terminal device moves from one cell to another cell, because wake-up resources used by the cells may be different, a case in which the terminal device may detect a wake-up signal in the one cell, but as the terminal device moves, the terminal device subsequently detects no wake-up signal in the another cell may exist. Therefore, when the terminal device detects no wake-up signal or the detected wake-up signal is less than the preset threshold, the terminal device may be woken up (in other words, the main circuit module of the terminal device may be enabled), and further receive the system message from the access network device when the terminal device is in a wake-up state. The system message may include one or more wake-up resources of a cell in which the terminal device is currently located. The system message may be a SIB1, a SIB2, or the like. This is not limited herein.

It should be noted that, after moving to a new cell and enabling the main circuit module to receive the system message, the terminal device may subsequently disable the main circuit module, to reduce power consumption of the terminal device.

Optionally, the terminal device may initiate random access to update a wake-up resource configuration. In other words, the access network device reconfigures the one or more wake-up resources for the terminal device. For example, the access network device may send first indication information to the terminal device, to indicate the one or more wake-up resources configured for the terminal device. Herein, the first indication information may be dedicated signaling, for example, an RRC connection release message or an RRC reconfiguration message. This is not limited herein.

S303: The terminal device determines a first wake-up resource based on the one or more wake-up resources.

In some feasible implementations, the terminal device may determine the first wake-up resource from the one or more configured wake-up resources. For example, the terminal device may determine the first wake-up resource from the one or more wake-up resources included in the system message. Alternatively, the terminal device may determine the first wake-up resource from the one or more wake-up resources indicated by the first indication information sent by the access network device. For ease of understanding, that the terminal device determines the first wake-up resource from the one or more wake-up resources included in the system message is mainly described below. For an implementation in which the terminal device determines the first wake-up resource based on the first indication information, refer to a related part in FIG. 2. Details are not described herein again.

In a possible implementation, when the system message includes one wake-up resource, the terminal device may determine, as the first wake-up resource used by the terminal device, the wake-up resource included in the system message. In another possible implementation, when the system message includes a plurality of wake-up resources, each wake-up resource may include at least one of the following information: an index, a frequency domain position, a start resource position, a quantity of continuous RBs, an end resource position, and the like of each resource. The terminal device may determine the first wake-up resource based on at least one of a maximum quantity of wake-up resources, an identifier of the terminal device, information about a probability that the terminal receives paging, and a paging parameter. Herein, the information about the probability that the terminal receives paging may be understood as a probability that the terminal device is paged on a wake-up resource. For example, a probability that the terminal device is paged on a wake-up resource 1 is 2/5, and a probability that the terminal device is paged on a wake-up resource 2 is 3/5. Alternatively, the information about the probability that the terminal receives paging may be understood as a weight for the terminal device to be paged on a wake-up resource. For example, assuming that a weight of the first wake-up resource is A, and a weight of a second wake-up resource is B, a probability that the terminal device is paged on the first wake-up resource is equivalent to A/A+B. The maximum quantity of wake-up resources, the identifier of the terminal device, the information about the probability that the terminal receives paging, and the paging parameter may be obtained from the access network device, may be specified in a protocol, or may be obtained from a core network device. This is not limited herein.

Specifically, the terminal device determines, based on the at least one of the maximum quantity of wake-up resources, the identifier of the terminal device, and the paging parameter, that the first wake-up resource may satisfy the following formula 1: $Index = floor \left(UE_ID/\left(N*Ns\right)\right) mod Max_resourced .$

Index represents an index of the first wake-up resource, UE_ID represents the identifier of the terminal device, Max_resourced represents the maximum quantity of wake-up resources, and N and Ns represent paging parameters. N is a total quantity of paging frames in one paging cycle, and Ns is a quantity of paging opportunities in one paging frame.

Alternatively, the terminal device determines, based on the at least one of the maximum quantity of wake-up resources, the identifier of the terminal device, and the paging parameter, that the first wake-up resource may satisfy the following formula 2: $Index = floor \left(UE_ID mod Max_resourced\right) .$

Index represents an index of the first wake-up resource, UE_ID represents the identifier of the terminal device, and Max_resourced represents the maximum quantity of wake-up resources.

Correspondingly, for the access network device, when the system message includes only one wake-up resource, the access network device may determine, as the first wake-up resource used by the terminal device, the wake-up resource included in the system message. When the system message includes a plurality of wake-up resources, the access network device may determine the first wake-up resource based on at least one of the maximum quantity of wake-up resources, the identifier of the terminal device, and the paging parameter. Specifically, the access network device determines, based on the at least one of the maximum quantity of wake-up resources, the identifier of the terminal device, and the paging parameter, that the first wake-up resource may satisfy the foregoing formula 1 or formula 2.

S304: The terminal device receives wake-up information from the access network device on the first wake-up resource.

In some feasible implementations, after determining the first wake-up resource used by the terminal device, the access network device may send the wake-up information to the terminal device on the first wake-up resource. Correspondingly, the terminal device may receive the wake-up information from the access network device on the first wake-up resource, and when determining that the wake-up information includes the identifier of the terminal device, the terminal device is woken up, in other words, the main circuit module of the terminal device is enabled.

S305: The terminal device receives a paging message, initiates the random access, or keeps in the wake-up state.

In some feasible implementations, after being woken up, the terminal device may receive the paging message, initiate the random access, or keep in the wake-up state.

In this application, in a case in which there is no wake-up signal coverage or there is poor coverage, the terminal device is woken up to receive the system message that carries the wake-up resource configuration, so that the terminal device can reselect a new wake-up resource (namely, the first wake-up resource) based on the resource configuration, to implement resource alignment with a network side. This further ensures that the terminal device can still continuously monitor the wake-up information in a scenario without continuous coverage.

It should be noted that the foregoing wake-up resource configuration for the terminal device is described by using an example in which the access network device configures a resource for the terminal device. In some possible implementations, the core network device may directly configure the one or more wake-up resources for the terminal device. It should be noted that the core network device may actively configure the one or more wake-up resources for the terminal device. Alternatively, the core network device may configure the one or more wake-up resources for the terminal device based on fifth indication information sent by the terminal device. In other words, the core network device configures the wake-up resource for the terminal device based on a request of the terminal device. For example, the core network device herein may be an AMF. This is not limited herein.

It may be understood that when configuring the wake-up resource for the terminal device, the core network device may transparently transmit configuration information of the wake-up resource to the terminal device via the access network device, or may send, to the access network device, configuration information of the wake-up resource visible to the access network device, and then the access network device sends the configuration information to the terminal device. This is specifically determined based on an actual application scenario, and is not limited herein.

It should be noted that, according to the solution provided in this application, in a movement process of a terminal in an idle state, the terminal device may not need to sense whether a camped-on cell is changed, and receive the wake-up message only based on the previously obtained configuration information of the wake-up resource. In other words, a cell selection or reselection procedure may not need to be performed, or a clock does not need to maintain a changed system message. In view of this, a beneficial effect of this solution is as follows: When moving in the idle state, the terminal device no longer needs to read the system message during cell handover, and receives the wake-up information only based on WUR configuration information (namely, the first indication information in the foregoing embodiment). Therefore, power consumption is reduced to a maximum extent. The main circuit needs to be woken up only when there is an abnormal scenario (for example, there is no wake-up signal coverage, or there is no wake-up signal), to update the system message.

It should be further noted that, in some other scenarios, for example, when determining that the terminal is in wake-up coverage but receives no wake-up information of the terminal within a long period of time, the terminal device may also be woken up to receive the system message or perform re-access, and further determine whether the configuration information of the wake-up resource needs to be updated. Specifically, when determining that the terminal device is in the wake-up coverage but receives no wake-up information of the terminal device, the terminal device may start a timer, and be woken up when the terminal device has not received any wake-up information when the timer expires. Duration of the timer may be specified in the protocol, or may be obtained from the access network device. This is not limited herein.

The following describes in detail communication apparatuses provided in this application with reference to FIG. 4 and FIG. 5.

FIG. 4 and FIG. 5 each are a diagram of a structure of a possible communication apparatus according to an embodiment of this application. The communication apparatuses may implement functions of the terminal device or the access network device in the foregoing method embodiments. Therefore, beneficial effects of the foregoing method embodiments can also be implemented. In this embodiment of this application, the communication apparatus may be the terminal device shown in FIG. 1, may be the access network device shown in FIG. 1, or may be a module (such as a chip) used in the terminal device or the access network device.

As shown in FIG. 4, the communication apparatus 400 includes a transceiver unit 401 and a processing unit 402. The communication apparatus 400 may be configured to implement functions of the terminal device or the access network device in the method embodiment shown in FIG. 2 or FIG. 3. It may be understood that a unit in this embodiment of this application may also be described as a module. For example, the transceiver unit may also be described as a transceiver module, and the processing unit may also be described as a processing module. This is not limited herein.

When the communication apparatus 400 is configured to implement the functions of the terminal device in the method embodiment in FIG. 2, the transceiver unit 401 is configured to receive first indication information from the access network device when a wake-up signal is detected or a detected wake-up signal is greater than or equal to a preset threshold, where the first indication information indicates one or more wake-up resources. The processing unit 402 is configured to determine a first wake-up resource based on the one or more wake-up resources. The transceiver unit 401 is configured to receive wake-up information from the access network device on the first wake-up resource. The transceiver unit 401 is configured to receive a paging message or initiate random access.

When the communication apparatus 400 is configured to implement the functions of the access network device in the method embodiment in FIG. 2 or FIG. 3, the transceiver unit 401 is configured to send first indication information to the terminal device, where the first indication information indicates one or more wake-up resources, and is configured to receive second indication information from a core network device, where the second indication information indicates to wake up the terminal device. The processing unit 402 is configured to determine a first wake-up resource based on the one or more wake-up resources. The transceiver unit 401 is configured to send wake-up information to the terminal device on the first wake-up resource. The wake-up information is used to wake up the terminal device to receive a paging message or is used to wake up the terminal device to initiate random access.

When the communication apparatus 400 is configured to implement the functions of the terminal device in the method embodiment in FIG. 3, the transceiver unit 401 is configured to wake up the terminal device when no wake-up signal is detected or a detected wake-up signal is less than a preset threshold, and is configured to receive a system message, where the system message includes one or more wake-up resources. The processing unit 402 is configured to determine a first wake-up resource based on the one or more wake-up resources. The transceiver unit 401 is configured to receive wake-up information from the access network device on the first wake-up resource, and is configured to receive a paging message, initiate random access, or keep in a wake-up state.

For more detailed descriptions of the transceiver unit 401 and the processing unit 402, refer to related descriptions in the foregoing method embodiments. Details are not described herein again.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530. The memory 530 is configured to store instructions executed by the processor 510, store input data required by the processor 510 to run instructions, or store data generated after the processor 510 runs instructions.

When the communication apparatus 500 is configured to implement the methods in the foregoing method embodiments, the processor 510 is configured to perform functions of the processing unit 402, and the interface circuit 520 is configured to perform functions of the transceiver unit 401.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements functions of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Method steps in embodiments of this application may be implemented by hardware, or may be implemented by a processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art. For example, a storage medium is coupled to a processor, so that the processor can read information from the storage medium and write information into the storage medium. Certainly, a storage medium may alternatively be a component of a processor. The processor and the storage medium may be located in an ASIC. In addition, the ASIC may be located in an access network device or a terminal device. Certainly, the processor and the storage medium may exist in the access network device or the terminal device as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a special-purpose computer, a computer network, or another programmable apparatus. The computer programs or the instructions may be stored in a computer-readable storage medium, or transmitted or received by using a computer-readable storage medium. The computer-readable storage medium may be any usable medium that can be accessed by the computer, or a data storage device, such as a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. In text descriptions of this application, a character "/" generally represents an "or" relationship between the associated objects. In a formula of this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A communication method, comprising:
sending (S201), by an access network device, first indication information to a terminal device, wherein the first indication information indicates one or more wake-up resources;
receiving (S202), by the access network device, second indication information from a core network device, wherein the second indication information indicates to wake up the terminal device;
determining, by the access network device, a first wake-up resource based on the one or more wake-up resources; and
sending (S203), by the access network device, wake-up information to the terminal device on the first wake-up resource, wherein the wake-up information is used to wake up the terminal device to receive a paging message or is used to wake up the terminal device to initiate random access; and
**characterized in that**,
before the sending (S201), by an access network device, first indication information to a terminal device, the method further comprises:
receiving, by the access network device, fifth indication information from the terminal device, wherein the fifth indication information indicates that the terminal device supports frequency division multiplexing of a wake-up resource; and
wherein the method further comprises:
sending, by the access network device, third indication information to the core network device, wherein the third indication information indicates that the access network device supports frequency division multiplexing of a wake-up resource.

2. The method according to claim 1, wherein the determining, by the access network device, a first wake-up resource based on a plurality of wake-up resources comprises:
determining, by the access network device, the first wake-up resource based on at least one of a maximum quantity of wake-up resources, an identifier of the terminal device, and a paging parameter.

3. The method according to claim 2, wherein the access network device determines, based on the at least one of the maximum quantity of wake-up resources, the identifier of the terminal device, and the paging parameter, that the first wake-up resource satisfies the following formula: $Index = floor \left(UE_ID/\left(N*Ns\right)\right) mod Max_resourced ,$ wherein
Index represents an index of the first wake-up resource, UE_ID represents the identifier of the terminal device, Max_resourced represents the maximum quantity of wake-up resources, and N and Ns represent paging parameters, wherein N is a total quantity of paging frames in one paging cycle, and Ns is a quantity of paging opportunities in one paging frame.

4. The method according to claim 2, wherein the access network device determines, based on the at least one of the maximum quantity of wake-up resources, the identifier of the terminal device, and the paging parameter, that the first wake-up resource satisfies the following formula: $Index = floor \left(UE_ID mod Max_resourced\right) ,$ wherein
Index represents an index of the first wake-up resource, UE_ID represents the identifier of the terminal device, and Max_resourced represents the maximum quantity of wake-up resources.

5. The method according to any one of claims 1 to 4, wherein the method further comprises:
sending, by the access network device, fourth indication information to the core network device, wherein the fourth indication information indicates the first wake-up resource.

6. A communication method, comprising:
receiving (S201), by a terminal device, first indication information from an access network device when the terminal device detects a wake-up signal or a detected wake-up signal is greater than or equal to a preset threshold, wherein the first indication information indicates one or more wake-up resources;
determining, by the terminal device, a first wake-up resource based on the one or more wake-up resources;
receiving (S203), by the terminal device, wake-up information from the access network device on the first wake-up resource; and
receiving (S204), by the terminal device, a paging message, or initiating random access; and
**characterized in that**,
before the receiving (S201), by a terminal device, first indication information from an access network device, the method further comprises:
sending, by the terminal device, fifth indication information to the access network device, wherein the fifth indication information indicates that the terminal device supports frequency division multiplexing of a wake-up resource.

7. A communication method, comprising:
waking (S301) up a terminal device when the terminal device detects no wake-up signal or a detected wake-up signal is less than a preset threshold;
receiving (S302), by the terminal device, a system message, wherein the system message comprises one or more wake-up resources;
determining (S303), by the terminal device, a first wake-up resource based on the one or more wake-up resources;
receiving (S304), by the terminal device, wake-up information from an access network device on the first wake-up resource; and
receiving (S305), by the terminal device, a paging message, initiating random access, or keeping in a wake-up state;
wherein before the receiving (S302), by the terminal device, a system message, the method further comprises:
sending, by the terminal device, fifth indication information to the access network device, wherein the fifth indication information indicates that the terminal device supports frequency division multiplexing of a wake-up resource.

8. The method according to claim 6 or 7, wherein the determining (S303), by the terminal device, a first wake-up resource based on a plurality of wake-up resources comprises:
determining, by the terminal device, the first wake-up resource based on at least one of a maximum quantity of wake-up resources, an identifier of the terminal device, and a paging parameter.

9. The method according to claim 8, wherein the terminal device determines, based on a plurality of wake-up resources, that the first wake-up resource satisfies the following formula: $Index = floor \left(UE_ID/\left(N*Ns\right)\right) mod Max_resourced ,$ wherein
Index represents an index of the first wake-up resource, UE_ID represents the identifier of the terminal device, Max_resourced represents the maximum quantity of wake-up resources, and N and Ns represent paging parameters, wherein N is a total quantity of paging frames in one paging cycle, and Ns is a quantity of paging opportunities in one paging frame.

10. The method according to claim 8, wherein the terminal device determines, based on a plurality of wake-up resources, that the first wake-up resource satisfies the following formula: $Index = floor \left(UE_ID mod Max_resourced\right) ,$ wherein
Index represents an index of the first wake-up resource, UE_ID represents the identifier of the terminal device, and Max_resourced represents the maximum quantity of wake-up resources.

11. A communication apparatus, comprising a unit or a module configured to perform the method according to any one of claims 1 to 5, or comprising a unit or a module configured to perform the method according to any one of claims 6 to 10.

12. A computer program product, comprising computer program code, wherein when the computer program code is run on a computer, the method according to any one of claims 1 to 5 or claims 6 to 10 is implemented.

13. A computer-readable storage medium, wherein the storage medium stores a computer program or instructions, and when the computer program or the instructions are executed by a computer, the method according to any one of claims 1 to 5 or claims 6 to 10 is implemented.

## Patentansprüche

1. Kommunikationsverfahren, das Folgendes umfasst:
Senden (S201), durch ein Zugriffsnetzwerkgerät, von ersten Anzeigeinformationen an ein Endgerät, wobei die ersten Anzeigeinformationen eine oder mehrere Weckressourcen anzeigen;
Empfangen (S202), durch das Zugriffsnetzwerkgerät, zweiter Anzeigeinformationen von einem Kernnetzwerkgerät, wobei die zweiten Anzeigeinformationen anzeigen, dass das Endgerät aufgeweckt werden soll;
Bestimmen, durch das Zugriffsnetzwerkgerät, einer ersten Weckressource basierend auf der einen oder den mehreren Weckressourcen; und
Senden (S203), durch das Zugriffsnetzwerkgerät, von Weckinformationen an das Endgerät auf der ersten Weckressource, wobei die Weckinformationen verwendet werden, um das Endgerät aufzuwecken, um eine Funkrufnachricht zu empfangen, oder verwendet werden, um das Endgerät aufzuwecken, um einen Direktzugriff zu initiieren; und
**dadurch gekennzeichnet, dass**
vor dem Senden (S201), durch ein Zugriffsnetzwerkgerät, von ersten Anzeigeinformationen an ein Endgerät, das Verfahren ferner Folgendes umfasst:
Empfangen, durch das Zugriffsnetzwerkgerät, von fünften Anzeigeinformationen von dem Endgerät, wobei die fünften Anzeigeinformationen anzeigen, dass das Endgerät ein Frequenzmultiplexing einer Weckressource unterstützt; und
wobei das Verfahren ferner Folgendes umfasst:
Senden, durch das Zugriffsnetzwerkgerät, von dritten Anzeigeinformationen an das Kernnetzwerkgerät, wobei die dritten Anzeigeinformationen anzeigen, dass das Zugriffsnetzwerkgerät ein Frequenzmultiplexing einer Weckressource unterstützt.

2. Verfahren nach Anspruch 1, wobei das Bestimmen, durch das Zugriffsnetzwerkgerät, einer ersten Weckressource basierend auf mehreren Weckressourcen Folgendes umfasst:
Bestimmen, durch das Zugriffsnetzwerkgerät, der ersten Weckressource basierend auf einer maximalen Anzahl von Weckressourcen, einer Kennung des Endgeräts und/oder einem Funkrufparameter.

3. Verfahren nach Anspruch 2, wobei das Zugriffsnetzwerkgerät basierend auf der maximalen Anzahl von Weckressourcen, der Kennung des Endgeräts und/oder dem Funkrufparameter bestimmt, dass die erste Weckressource die folgende Formel erfüllt: $Index = Abrundung \left(UE_ID/\left(N*Ns\right)\right) mod Max_resourced ,$ wobei
Index einen Index der ersten Weckressource darstellt, UE_ID die Kennung des Endgeräts darstellt, Max_resourced die maximale Anzahl von Weckressourcen darstellt und N und Ns Funkrufparameter darstellen, wobei N eine Gesamtanzahl von Funkruf-Frames in einem Funkrufzyklus ist und Ns eine Anzahl von Funkrufgelegenheiten in einem Funkruf-Frame ist.

4. Verfahren nach Anspruch 2, wobei das Zugriffsnetzwerkgerät basierend auf der maximalen Anzahl von Weckressourcen, der Kennung des Endgeräts und/oder dem Funkrufparameter bestimmt, dass die erste Weckressource die folgende Formel erfüllt: $Index = Abrundung \left(UE_ID mod Max_resourced\right) ,$ wobei
Index einen Index der ersten Weckressource darstellt, UE_ID die Kennung des Endgeräts darstellt und Max_resourced die maximale Anzahl von Weckressourcen darstellt.

5. Verfahren nach einem der Ansprüche 1 bis 4, wobei das Verfahren ferner Folgendes umfasst:
Senden, durch das Zugriffsnetzwerkgerät, von vierten Anzeigeinformationen an das Kernnetzwerkgerät, wobei die vierten Anzeigeinformationen die erste Weckressource anzeigen.

6. Kommunikationsverfahren, das Folgendes umfasst:
Empfangen (S201), durch ein Endgerät, von ersten Anzeigeinformationen von einem Zugriffsnetzwerkgerät, wenn das Endgerät ein Wecksignal detektiert oder ein detektiertes Wecksignal größer als oder gleich einem voreingestellten Schwellenwert ist, wobei die ersten Anzeigeinformationen eine oder mehrere Weckressourcen anzeigen;
Bestimmen, durch das Endgerät, einer ersten Weckressource basierend auf der einen oder den mehreren Weckressourcen;
Empfangen (S203), durch das Endgerät, von Weckinformationen von dem Zugriffsnetzwerkgerät auf der ersten Weckressource; und
Empfangen (S204), durch das Endgerät, einer Funkrufnachricht, oder Initiieren eines Direktzugriffs; und
**dadurch gekennzeichnet, dass**
vor dem Empfangen (S201), durch ein Endgerät, von ersten Anzeigeinformationen von einem Zugriffsnetzwerkgerät, das Verfahren ferner Folgendes umfasst:
Senden, durch das Endgerät, von fünften Anzeigeinformationen an das Zugriffsnetzwerkgerät, wobei die fünften Anzeigeinformationen anzeigen, dass das Endgerät ein Frequenzmultiplexing einer Weckressource unterstützt.

7. Kommunikationsverfahren, das Folgendes umfasst:
Wecken (S301) eines Endgeräts, wenn das Endgerät kein Wecksignal detektiert oder ein detektiertes Wecksignal kleiner als ein voreingestellter Schwellenwert ist;
Empfangen (S302), durch das Endgerät, einer Systemnachricht, wobei die Systemnachricht eine oder mehrere Weckressourcen umfasst;
Bestimmen (S303), durch das Endgerät, einer ersten Weckressource basierend auf der einen oder den mehreren Weckressourcen;
Empfangen (S304), durch das Endgerät, von Weckinformationen von einem Zugriffsnetzwerkgerät auf der ersten Weckressource; und
Empfangen (S305), durch das Endgerät, einer Funkrufnachricht, Initiieren eines Direktzugriffs, oder Verbleiben in einem Weckzustand;
wobei vor dem Empfangen (S302), durch das Endgerät, einer Systemnachricht das Verfahren ferner Folgendes umfasst:
Senden, durch das Endgerät, von fünften Anzeigeinformationen an das Zugriffsnetzwerkgerät, wobei die fünften Anzeigeinformationen anzeigen, dass das Endgerät ein Frequenzmultiplexing einer Weckressource unterstützt.

8. Verfahren nach Anspruch 6 oder 7, wobei das Bestimmen (S303), durch das Endgerät, einer ersten Weckressource basierend auf mehreren Weckressourcen Folgendes umfasst:
Bestimmen, durch das Endgerät, der ersten Weckressource basierend auf einer maximalen Anzahl von Weckressourcen, einer Kennung des Endgeräts und/oder einem Funkrufparameter.

9. Verfahren nach Anspruch 8, wobei das Endgerät basierend auf mehreren Weckressourcen bestimmt, dass die erste Weckressource die folgende Formel erfüllt: $Index = Abrundung \left(UE_ID/\left(N*Ns\right)\right) mod Max_resourced ,$ wobei
Index einen Index der ersten Weckressource darstellt, UE_ID die Kennung des Endgeräts darstellt, Max_resourced die maximale Anzahl von Weckressourcen darstellt und N und Ns Funkrufparameter darstellen, wobei N eine Gesamtanzahl von Funkruf-Frames in einem Funkrufzyklus ist und Ns eine Anzahl von Funkrufgelegenheiten in einem Funkruf-Frame ist.

10. Verfahren nach Anspruch 8, wobei das Endgerät basierend auf mehreren Weckressourcen bestimmt, dass die erste Weckressource die folgende Formel erfüllt: $Index = Abrundung \left(UE_ID mod Max_resourced\right) ,$ wobei
Index einen Index der ersten Weckressource darstellt, UE_ID die Kennung des Endgeräts darstellt und Max_resourced die maximale Anzahl von Weckressourcen darstellt.

11. Kommunikationsvorrichtung, die eine Einheit oder ein Modul umfasst, die bzw. das dazu konfiguriert ist, das Verfahren nach einem der Ansprüche 1 bis 5 durchzuführen, oder die eine Einheit oder ein Modul umfasst, die bzw. das dazu konfiguriert ist, das Verfahren nach einem der Ansprüche 6 bis 10 durchzuführen.

12. Computerprogrammprodukt, das Computerprogrammcode umfasst, wobei, wenn der Computerprogrammcode auf einem Computer ausgeführt wird, das Verfahren nach einem der Ansprüche 1 bis 5 oder der Ansprüche 6 bis 10 implementiert wird.

13. Computerlesbares Speichermedium, wobei das Speichermedium ein Computerprogramm oder Anweisungen speichert, und wobei, wenn das Computerprogramm oder die Anweisungen durch einen Computer ausgeführt werden, das Verfahren nach einem der Ansprüche 1 bis 5 oder der Ansprüche 6 bis 10 implementiert wird.

## Revendications

1. Procédé de communication, comprenant :
l'envoi (S201), par un dispositif de réseau d'accès, de premières informations d'indication à un dispositif de terminal, dans lequel les premières informations d'indication indiquent une ou plusieurs ressources de réveil ;
la réception (S202), par le dispositif de réseau d'accès, de deuxièmes informations d'indication en provenance d'un dispositif de réseau central, dans lequel les deuxièmes informations d'indication indiquent de réveiller le dispositif de terminal ;
la détermination, par le dispositif de réseau d'accès, d'une première ressource de réveil, sur la base de l'une ou des plusieurs ressources de réveil ; et
l'envoi (S203), par le dispositif de réseau d'accès, d'informations de réveil au dispositif de terminal sur la première ressource de réveil, dans lequel les informations de réveil sont utilisées pour réveiller le dispositif de terminal pour recevoir un message de radiomessagerie ou sont utilisées pour réveiller le dispositif de terminal pour déclencher un accès aléatoire ; et
**caractérisé en ce que**,
avant l'envoi (S201), par un dispositif de réseau d'accès, de premières informations d'indication à un dispositif de terminal, le procédé comprend en outre :
la réception, par le dispositif de réseau d'accès, de cinquièmes informations d'indication en provenance du dispositif de terminal, dans lequel les cinquièmes informations d'indication indiquent que le dispositif de terminal prend en charge un multiplexage par répartition en fréquence d'une ressource de réveil ; et
dans lequel le procédé comprend en outre :
l'envoi, par le dispositif de réseau d'accès, de troisièmes informations d'indication au dispositif de réseau central, dans lequel les troisièmes informations d'indication indiquent que le dispositif de réseau d'accès prend en charge un multiplexage par répartition en fréquence d'une ressource de réveil.

2. Procédé selon la revendication 1, dans lequel la détermination, par le dispositif de réseau d'accès, d'une première ressource de réveil, sur la base d'une pluralité de ressources de réveil comprend :
la détermination, par le dispositif de réseau d'accès, de la première ressource de réveil, sur la base d'au moins un élément parmi une quantité maximum de ressources de réveil, un identifiant du dispositif de terminal, et un paramètre de radiomessagerie.

3. Procédé selon la revendication 2, dans lequel le dispositif de réseau d'accès détermine, sur la base de l'au moins un élément parmi la quantité maximum de ressources de réveil, l'identifiant du dispositif de terminal, et le paramètre de radiomessagerie, que la première ressource de réveil respecte la formule suivante : $Index = floor \left(UE_ID/\left(N*Ns\right)\right) mod Max_resourced ,$ dans laquelle
Index représente un indice de la première ressource de réveil, UE_ID représente l'identifiant du dispositif de terminal, Max_resourced représente la quantité maximum de ressources de réveil, et N et Ns représentent des paramètres de radiomessagerie, dans lequel N est une quantité totale de trames de radiomessagerie dans un cycle de radiomessagerie, et Ns est une quantité d'opportunités de radiomessagerie dans une trame de radiomessagerie.

4. Procédé selon la revendication 2, dans lequel le dispositif de réseau d'accès détermine, sur la base de l'au moins un élément parmi la quantité maximum de ressources de réveil, l'identifiant du dispositif de terminal, et le paramètre de radiomessagerie, que la première ressource de réveil respecte la formule suivante : $Index = floor \left(UE_ID mod Max_resourced\right) ,$ dans laquelle
Index représente un indice de la première ressource de réveil, UE_ID représente l'identifiant du dispositif de terminal, et Max_resourced représente la quantité maximum de ressources de réveil.

5. Procédé selon l'une quelconque des revendications 1 à 4, dans lequel le procédé comprend en outre :
l'envoi, par le dispositif de réseau d'accès, de quatrièmes informations d'indication au dispositif de réseau central, dans lequel les quatrièmes informations d'indication indiquent la première ressource de réveil.

6. Procédé de communication, comprenant :
la réception (S201), par un dispositif de terminal, de premières informations d'indication en provenance d'un dispositif de réseau d'accès, lorsque le dispositif de terminal détecte qu'un signal de réveil ou un signal de réveil détecté est supérieur ou égal à un seuil prédéfini, dans lequel les premières informations d'indication indiquent une ou plusieurs ressources de réveil ;
la détermination, par le dispositif de terminal, d'une première ressource de réveil, sur la base de l'une ou des plusieurs ressources de réveil ;
la réception (S203), par le dispositif de terminal, d'informations de réveil en provenance du dispositif de réseau d'accès sur la première ressource de réveil ; et
la réception (S204), par le dispositif de terminal, d'un message de radiomessagerie, ou le déclenchement d'un accès aléatoire ; et
**caractérisé en ce que**,
avant la réception (S201), par un dispositif de terminal, de premières informations d'indication en provenance d'un dispositif de réseau d'accès, le procédé comprend en outre :
l'envoi, par le dispositif de terminal, de cinquièmes informations d'indication au dispositif de réseau d'accès, dans lequel les cinquièmes informations d'indication indiquent que le dispositif de terminal prend en charge un multiplexage par répartition en fréquence d'une ressource de réveil.

7. Procédé de communication, comprenant :
le réveil (S301) d'un dispositif de terminal, lorsque le dispositif de terminal ne détecte aucun signal de réveil ou un signal de réveil détecté est inférieur à un seuil prédéfini ;
la réception (S302), par le dispositif de terminal, d'un message de système, dans lequel le message de système comprend une ou plusieurs ressources de réveil ;
la détermination (S303), par le dispositif de terminal, d'une première ressource de réveil, sur la base de l'une ou des plusieurs ressources de réveil ;
la réception (S304), par le dispositif de terminal, d'informations de réveil en provenance d'un dispositif de réseau d'accès sur la première ressource de réveil ; et
la réception (S305), par le dispositif de terminal, d'un message de radiomessagerie, le déclenchement d'un accès aléatoire, ou le maintien dans un état de réveil ;
dans lequel, avant la réception (S302), par le dispositif de terminal, d'un message de système, le procédé comprend en outre :
l'envoi, par le dispositif de terminal, de cinquièmes informations d'indication au dispositif de réseau d'accès, dans lequel les cinquièmes informations d'indication indiquent que le dispositif de terminal prend en charge un multiplexage par répartition en fréquence d'une ressource de réveil.

8. Procédé selon la revendication 6 ou 7, dans lequel la détermination (S303), par le dispositif de terminal, d'une première ressource de réveil, sur la base d'une pluralité de ressources de réveil comprend :
la détermination, par le dispositif de terminal, de la première ressource de réveil, sur la base d'au moins un élément parmi une quantité maximum de ressources de réveil, un identifiant du dispositif de terminal, et un paramètre de radiomessagerie.

9. Procédé selon la revendication 8, dans lequel le dispositif de terminal détermine, sur la base d'une pluralité de ressources de réveil, que la première ressource de réveil respecte la formule suivante : $Index = floor \left(UE_ID/\left(N*Ns\right)\right) mod Max_resourced ,$ dans laquelle
Index représente un indice de la première ressource de réveil, UE_ID représente l'identifiant du dispositif de terminal, Max_resourced représente la quantité maximum de ressources de réveil, et N et Ns représentent des paramètres de radiomessagerie, dans lequel N est une quantité totale de trames de radiomessagerie dans un cycle de radiomessagerie, et Ns est une quantité d'opportunités de radiomessagerie dans une trame de radiomessagerie.

10. Procédé selon la revendication 8, dans lequel le dispositif de terminal détermine, sur la base d'une pluralité de ressources de réveil, que la première ressource de réveil respecte la formule suivante : $Index = floor \left(UE_ID mod Max_resourced\right) ,$ dans laquelle
Index représente un indice de la première ressource de réveil, UE_ID représente l'identifiant du dispositif de terminal, et Max_resourced représente la quantité maximum de ressources de réveil.

11. Appareil de communication, comprenant une unité ou un module configuré pour réaliser le procédé selon l'une quelconque des revendications 1 à 5, ou comprenant une unité ou un module configuré(e) pour réaliser le procédé selon l'une quelconque des revendications 6 à 10.

12. Produit programme d'ordinateur, comprenant un code de programme d'ordinateur, dans lequel, lorsque le code de programme d'ordinateur est exploité sur un ordinateur, le procédé selon l'une quelconque des revendications 1 à 5 ou des revendications 6 à 10 est mis en œuvre.

13. Support de stockage lisible par ordinateur, dans lequel le support de stockage stocke un programme d'ordinateur ou des instructions, et, lorsque le programme d'ordinateur ou les instructions sont exécutés par un ordinateur, le procédé selon l'une quelconque des revendications 1 à 5 ou les revendications 6 à 10 est mis en œuvre.
